# EUROPEAN PATENT APPLICATION

(11) **EP 4 075 193 A1**
(43) Date of publication of application: **19.10.2022**
(21) Application number: 20897688.6
(22) Date of filing: 13.03.2020
(51) Int. Cl.: G03B 21/14, H04N 9/31

(54) **PROJECTOR AND PROJECTION METHOD**

(30) Priority: 13.12.2019 CN 201911289136
(71) Applicant: Chengdu Xgimi Technology Co., Ltd, Chengdu, Sichuan 610041 (CN)
(72) Inventor: ZHONG, Bo, Chengdu, Sichuan 610041 (CN); XIAO, Shi, Chengdu, Sichuan 610041 (CN); WANG, Xin, Chengdu, Sichuan 610041 (CN); YU, Jinqing, Chengdu, Sichuan 610041 (CN)
(74) Representative: Grey, Ian Michael
(86) International application number: PCT/CN2020/079170
(87) International publication number: WO 2021/114502

(57) **Abstract**

A projector (100), including: a housing (110); an opto-mechanical system (120) arranged inside the housing (110); a first light source (140) arranged on the housing (110) and configured to emit target light of a specified wavelength; a semi-transmissive and semi-reflective sheet (130) arranged in the opto-mechanical system (120) and configured to transmit visible light and reflect target light entering the opto-mechanical system (120), wherein the target light entering the opto-mechanical system (120) is target light reflected back from an obstacle when the target light emitted by the first light source encounters the obstacle; and a light sensor (150) configured to detect target light reflected from the semi-transmissive and semi-reflective sheet (130), and determine position information of the obstacle according to a first time when the first light source (140) emits the target light and a second time when the light sensor (150) detects the target light reflected from the semi-transmissive and semi-reflective sheet (130). A projection method is also provided.

## Description

### TECHNICAL FIELD

The application relates to the technical field of projection, and in particular to a projector and a projection method.

### BACKGROUND

Since a projector generally has only a projection function and a projected picture of the projector is typically a picture on a plane projection background, application scenarios of the projector are very limited.

### SUMMARY

In view of this, an object of embodiments of the application is to provide a projector and a projection method. An effect that the projector may identify a surrounding three-dimensional scene can be achieved.

In a first aspect, the embodiments provide a projector, comprising: a housing; an opto-mechanical system arranged inside the housing; a first light source arranged on the housing and configured to emit target light of a specified wavelength; a semi-transmissive and semi-reflective sheet arranged in the opto-mechanical system and configured to transmit visible light and reflect target light entering the opto-mechanical system, wherein the target light entering the opto-mechanical system is target light reflected back from an obstacle when the target light emitted by the first light source encounters the obstacle; and a light sensor configured to detect target light reflected from the semi-transmissive and semi-reflective sheet, and determine position information of the obstacle according to a first time when the first light source emits the target light and a second time when the light sensor detects the target light reflected from the semi-transmissive and semi-reflective sheet.

In an optional implementation, the light sensor is a time-of-flight sensor, the first light source is an infrared light source, and the target light is infrared light.

In the projector provided by the embodiments of the application, a first infrared light source emits modulated near-infrared light, which is reflected upon encountering an obstacle, the time-of-flight sensor computes a distance of an obstacle that is photographed by calculating a time difference or phase difference between emission and reflection of infrared light, so as to generate depth information and thus obtain three-dimensional coordinates of the obstacle.

In an optional implementation, the opto-mechanical system further comprises: a digital micro-mirror device arranged inside the housing and located at a side away from a lens of the opto-mechanical system, and wherein the semi-transmissive and semi-reflective sheet is arranged between the lens of the opto-mechanical system and the digital micro-mirror device.

In an optional implementation, a photosensitive surface of the light sensor is perpendicular to a light path of reflected light from the semi-transmissive and semi-reflective sheet.

In the projector provided by the embodiments of the application, by making the photosensitive surface of the light sensor perpendicular to the light path of the reflected light from the semi-transmissive and semi-reflective film, the light sensor may receive the reflected target light better, so that detection data is more accurate.

In an optional implementation, the photosensitive surface of the light sensor is perpendicular to the digital micro-mirror device, an angle between the digital micro-mirror device and the semi-transmissive and semi-reflective sheet is 45°, and an angle between the semi-transmissive and semi-reflective sheet and the photosensitive surface of the light sensor is 45°.

In an optional implementation, an angle between the semi-transmissive and semi-reflective sheet and outgoing light passing through the opto-mechanical system is 45°, and the photosensitive surface of the light sensor is perpendicular to a path of the reflected light from the semi-transmissive and semi-reflective sheet.

In an optional implementation, the first light source is arranged on a first surface of the housing, and the first surface is a surface provided with the lens of the opto-mechanical system.

In the projector provided by the embodiments of the application, the above installation angles may make the photosensitive surface of the light sensor perpendicular to the optical path of the reflected light from the semi-transmissive and semi-reflective sheet, so that the light sensor may detect the reflected target light better.

In a second aspect, the embodiments provides a projection method applied to the projector according to any one of the above implementations, the projection method comprising: emitting, by a first light source of the projector, target light of a specified wavelength; determining, by a light sensor of the projector, first depth image data of a projection plane; and correcting a projected picture of the projector according to the first depth image data.

In an optional implementation, the method further comprises: determining, by the light sensor, second depth image data in a target area; determining an indication action that appears in the target area according to the second depth image data; and executing an instruction associated with the indication action.

The projection method provided by the embodiments of the application may also identify an action of a user, and thus may realize user interaction and improve practicability of the projector.

In an optional implementation, the method further comprises: calibrating the light sensor of the projector.

The projection method provided by the embodiments of the application may also calibrate the light sensor, so that test data of the light sensor is more accurate.

In the projector and the projection method provided by the embodiments of the application, by adding the light sensor in the projector and detecting a round-trip propagation time of light when the light encounters an obstacle by the light sensor, coordinate information of the obstacle may be determined, and three-dimensional environment information of a surrounding environment may be obtained. Compared with the prior art in which a projector generally has only a projection function and a projected picture of the projector is typically a picture on a plane projection background, solutions in the embodiments of the application may perceive surrounding three-dimensional information, so that the projector can adapt to more three-dimensional scenarios. Furthermore, since the projector of the embodiments of the application may perceive surrounding three-dimensional scenarios, it may be used to project a picture onto a three-dimensional surface for display.

In order to make the above objects, features and advantages of the application more obvious and easy to understand, a detailed description is provided in the following by reference to embodiments in combination with accompany drawings.

### BRIEF DESCRIPTION OF THE DRAWINGS

In order to explain technical solutions of embodiments of the application more clearly, drawings to be used in the embodiments are introduced briefly in the following. It should be understood that the following drawings merely show some embodiments of the application, and they should not be regarded as limiting scopes of the application. Those ordinary skilled in the art may also obtain other relevant drawings from these drawings without creative working.
Fig. 1 is a structure diagram of a projector provided by the embodiments of the application.
Fig. 2 is another structure diagram of the projector provided by the embodiments of the application.
Fig. 3 is a block diagram of the projector provided by the embodiments of the application.
Fig. 4 is a diagram of a light path of the projector provided by the embodiments of the application.
Fig. 5 is a flowchart of a projection method provided by the embodiments of the application.
Fig. 6 is a partial flowchart of the projection method provided by the embodiments of the application.

Drawing reference signs: 100 - projector; 110 - housing; 120 - opto-mechanical system; 121 - lens; 122 - second light source; 123 - digital micro-mirror device; 130 - semi-transmissive and semi-reflective sheet; 140 - first light source; 150 - light sensor; 160 - memory; 170 - storage controller; 180 - processor; 190 - peripheral interface; C1 - curtain.

### DETAILED DESCRIPTION

Technical solutions in embodiments of the application will be described below in combination with accompanying drawings in the embodiments of the application.

It should be noted that similar reference numbers and letters represent similar items in the accompany drawings. Therefore, once an item is defined in a drawing, it is unnecessary to further define and explain the item in subsequent drawings. Meanwhile, in the description of the application, terms "first", "second" and the like are merely used for distinguishing description, and should not be understood as indicating or implying relative importance.

### Embodiment 1

In order to facilitate understanding of the embodiment, a projector 100 for performing a projection method disclosed in the embodiments of the application is firstly described in detail.

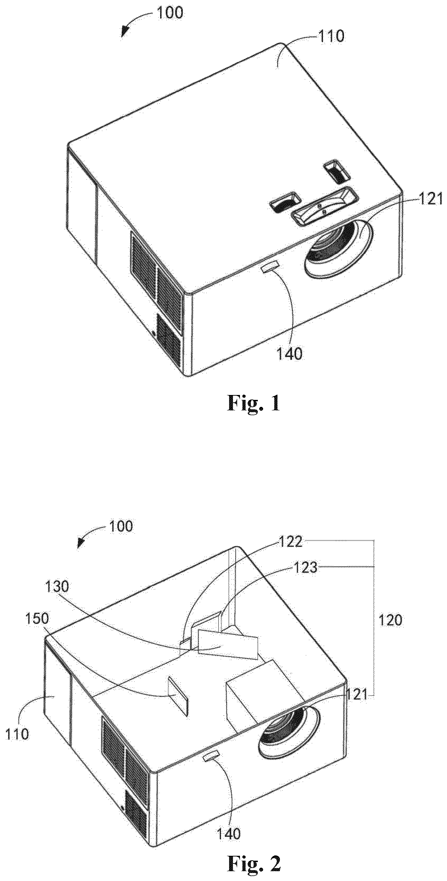

As shown in Figs. 1 and 2, in the embodiment, the projector 100 includes a housing 110, an opto-mechanical system 120 installed inside the housing 110, a first light source 140 arranged on the housing 110, and a light sensor 150 installed inside the housing 110.

In the embodiment, the opto-mechanical system 120 is used to project an image to be projected onto a target display surface. The target display surface may be a curtain, a wall and so on.

In the embodiment, the opto-mechanical system 120 may include a lens 121, a second light source 122 and a digital micro-mirror device 123 (DMD).

For example, a first surface of the housing 110 of the projector 100 is provided with a through-hole, a first end of the lens 121 of the opto-mechanical system 120 is exposed on a surface of the housing 110 by the through-hole, and a second end of the lens 121 is arranged inside the housing 110.

Optionally, the projector 100 may also include a first protective cover for covering the first end of the lens 121.

For example, the digital micro-mirror device 123 of the opto-mechanical system 120 is located at a side where the second end of the lens 121 of the opto-mechanical system 120 is located. The digital micro-mirror device 123 is a device for controlling a micro-mirror to perform mechanical movements by using a digital voltage signal so as to realize an optical function.

Optionally, the second light source 122 may also be installed at the side where the second end of the lens 121 of the opto-mechanical system 120 is located.

Optionally, as shown in Fig. 1, the projector 100 may also include a plurality of adjustment knobs (not labeled in the figure) for adjusting a focal length of the lens 121 of the opto-mechanical system 120.

In the embodiment, as shown in Fig. 1, the first light source 140 may be installed on the first surface of the housing 110 and configured to emit target light of a specified wavelength.

For example, as shown in Fig. 1 or 2, the first light source 140 may be installed on the first surface of an outer surface of the housing 110. For example, the through-hole may be provided on the first surface of the outer surface of the housing 110, the first light source 140 may be installed inside the housing 100, and a light outgoing surface of the first light source 140 may face the through-hole, so that the target light emitted by the first light source 140 may pass through the through-hole. The first light source 140 may also pass through the through-hole, so that the light outgoing surface of the first light source 140 is exposed on the outside surface of the housing 100.

Optionally, the projector 100 may also include a second protective cover. The second protective cover may be used to cover the light outgoing surface of the first light source 140.

In an implementation, the first light source 140 is an infrared light source, the target light emitted by the first light source 140 is infrared light, and the wavelength of the target light may be in a range of 760 nm to 1 mm.

Optionally, the first light source 140 may transmit light after high-frequency modulating the light. For example, the first light source 140 may be a Light Emitting Diode (LED) or a laser. The laser may be a laser diode or a Vertical Cavity Surface Emitting Laser (VCSEL). The first light source 140 emits high-performance pulse light, pulses of which may reach about 100MHz.

Referring again to Fig. 2, the semi-transmissive and semi-reflective sheet 130 of the projector 100 may be arranged between the lens 121 of the opto-mechanical system 120 and the digital micro-mirror device 123.

For example, an angle between the semi-transmissive and semi-reflective sheet 130 and a surface, which is close to the lens 121 of the opto-mechanical system 120, of the digital micro-mirror device 123 may be 45°.

Optionally, an angle between the semi-transmissive and semi-reflective sheet 130 and outgoing light passing through the opto-mechanical system 120 is 45°. For example, an angle between the semi-transmissive and semi-reflective sheet 130 and emitted light from the first light source 140 is 45°.

Optionally, the semi-transmissive and semi-reflective sheet 130 can transmit visible light and reflect invisible light.

In the embodiment, the target light emitted by the first light source 140 may be a kind of invisible light. For example, the target light may be infrared light. The emitted light from the second light source 122 is visible light. Therefore, the semi-transmissive and semi-reflective sheet 130 can transmit the emitted light from the second light source 122 and reflect the target light emitted by the first light source 140.

In the embodiment, the semi-transmissive and semi-reflective sheet 130 may be used to reflect target light entering the opto-mechanical system 120. The target light entering the opto-mechanical system 120 is target light reflected back from an obstacle when the target light emitted by the first light source 140 encounters the obstacle.

For example, the obstacle may be a display surface of an image projected by the projector 100. The obstacle may also be a person interacting with the projector 100.

In the embodiment, the light sensor 150 included in the projector 100 may be used to detect the target light reflected from the semi-transmissive and semi-reflective sheet 130.

For example, in the embodiment, a light outgoing surface of the light sensor 150 corresponds to the reflective surface of the semi-transmissive and semi-reflective sheet 130, so that the light sensor 150 may detect the target light reflected from the semi-transmissive and semi-reflective sheet 130.

For example, in the embodiment, the light sensor 150 may be installed in a light path of the reflected light from the semi-transmissive and semi-reflective sheet 130. Optionally, the photosensitive surface of the light sensor 150 is perpendicular to a path of the reflected light from the semi-transmissive and semi-reflective sheet 130.

Optionally, the photosensitive surface of the light sensor 150 may be perpendicular to the digital micro-mirror device 123, and an angle between the digital micro-mirror device 123 and the semi-transmissive and semi-reflective sheet 130 is 45°, so that an angle between the semi-transmissive and semi-reflective sheet 130 and the photosensitive surface of the light sensor 150 is 45°. For example, the photosensitive surface of the light sensor 150 being perpendicular to the digital micro-mirror device 123 may mean that the photosensitive surface of the light sensor 150 may be perpendicular to a surface, which faces the lens 121 of the opto-mechanical system 120, of the digital micro-mirror device 123.

The light sensor 150 determines position information of the obstacle according to a first time when the first light source 140 emits the target light and a second time when the light sensor 150 detects the target light reflected from the semi-transmissive and semi-reflective sheet 130.

Optionally, the optical sensor 150 is a Time-Of-Flight (TOF) sensor.

Optionally, the angle between the semi-transmissive and semi-reflective sheet 130 and the outgoing light passing through the opto-mechanical system 120 is 45°, and the photosensitive surface of the light sensor 150 is perpendicular to the path of the reflected light from the semi-transmissive and semi-reflective sheet 130. For example, an angle between the semi-transmissive and semi-reflective sheet 130 and a light outgoing surface of the second light source 122 may be 45°.

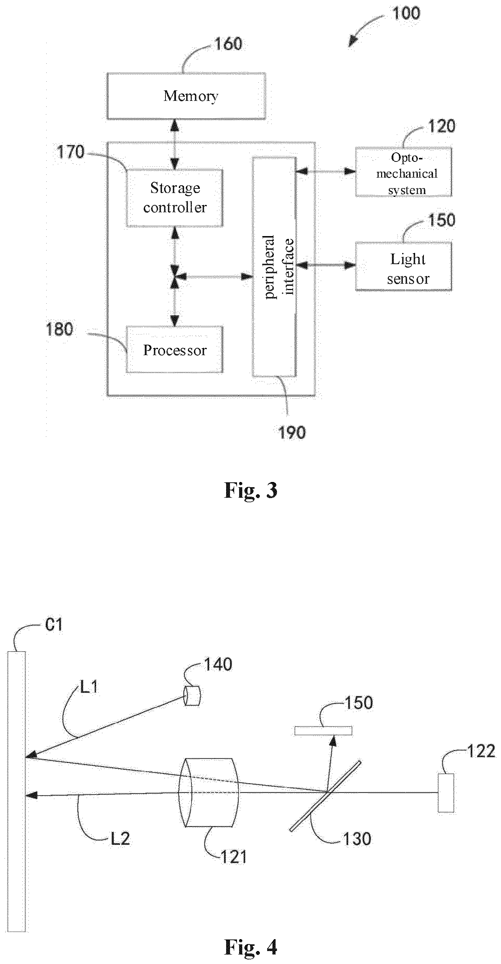

Fig. 3 is a block diagram of the projector 100. The projector 100 may include a memory 160, a storage controller 170, a processor 180, and a peripheral interface 190. It can be understood by those ordinary skilled in the art that the structure shown in Fig. 3 is merely schematic, and it does not limit the structure of the projector 100. For example, the projector 100 may also include more or fewer components than those shown in Fig. 3, or have a different configuration from that shown in Fig. 1.

The memory 160, the storage controller 170, the processor 180 and the peripheral interface 190 are directly or indirectly electrically connected with each other to realize data transmission or interaction. For example, these elements may be electrically connected to each other through one or more communication buses or signal lines. The processor 180 is used to execute executable modules stored in the memory 160.

The memory 160 may be, but is not limited to, a Random Access Memory 160 (RAM), a Read Only Memory 160 (ROM), a Programmable Read-Only Memory 160 (PROM), an Erasable Programmable Read-Only Memory 160 (EPROM), an Electric Erasable Programmable Read-Only Memory (EEPROM) and so on. The memory 160 is used to store a program, and the processor 180 executes the program upon receiving an instruction to execute to the program. A method performed by the projector 100, which is defined by a process disclosed by any embodiments of the application, may be applied to the processor 180 or may be implemented by the processor 180.

The processor 180 may be an integrated circuit chip having a signal processing capability. The processor 180 may be a general-purpose processor including a Central Processing Unit (CPU), a Network Processor (NP) and so on; may also be a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps and logical block diagrams disclosed in the embodiments of the application each may be implemented or executed. The general-purpose processor may be a microprocessor or the processor may also be any conventional processor or the like.

The peripheral interface 190 couples various input/output devices to the processor 180 and the memory 160. In some embodiments, the peripheral interface 190, the processor 180, and the storage controller 170 may be implemented in a single chip. In some other examples, they may be implemented by different chips, respectively.

Optionally, the projector 100 may also include a control circuit for controlling projection related parameters of the projector 100. For example, the projection related parameters may be projection brightness parameters and projection picture parameters. For example, the control circuit may also project an image according to a video signal.

The projector 100 provided in the embodiment can realize perception of a three-dimensional environment around the projector 100. Furthermore, in the embodiment, the light sensor 150 and the lens 121 of the opto-mechanical system 120 may form a depth camera, which may obtain three-dimensional environment data around the projector 100. In the embodiment, the depth camera shares the lens 121 with the opto-mechanical system 120 of the projector 100, and the projector 100 with a three-dimensional perception capability is realized with few improvements to an existing projector 100.

Operating principles of the projector 100 are described below by taking an example in which a display interface of the projector is a curtain.

As shown in Fig. 4, after the target light L1 emitted by the first light source 140 is emitted toward the curtain C1, the target light L1 is reflected back to the lens 121 upon encountering the curtain C1 and is reflected to the light sensor 150 upon encountering the semi-transmissive and semi-reflective sheet 130 that can reflect the target light, so that the light sensor 150 obtains a distance from the curtain C1 according to a flight time of the target light by detecting light pulses. Furthermore, the light sensor 150 may determine three-dimensional coordinates of the curtain C according to the determined distance from the curtain C1.

Furthermore, since the visible light may pass through the semi-transmissive and semi-reflective sheet 130, the emitted light L2 from the second light source 122 may successively pass through the semi-transmissive and semi-reflective sheet 130 and the lens 121 and then be projected to the curtain C1 and imaged on the curtain C1.

The projector 100 in the embodiment may be used to perform respective steps of respective methods provided in the embodiments of the application. An implementation process of the projection method is described in detail below in conjunction with several embodiments.

### Example 2

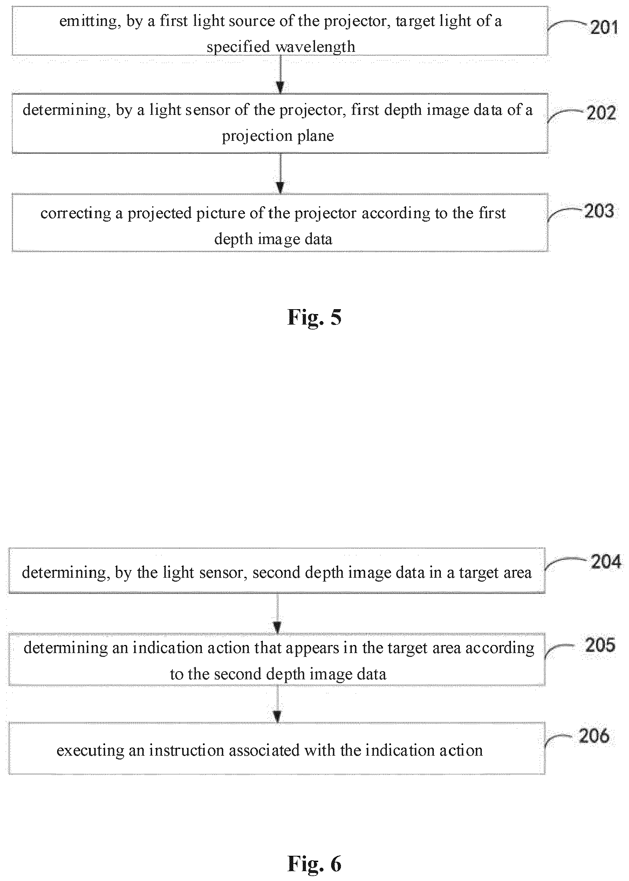

Fig. 5 is a flowchart of a projection method provided by the embodiment of the application. A specific process shown in Fig. 5 will be described in detail below.

Step 201, the target light of the specified wavelength is emitted by the first light source of the projector.

In the embodiment, the first light source may continuously emit the target light after the projector is started.

Step 202, the first depth image data of the projection plane is determined by the light sensor of the projector.

In the embodiment, the light sensor shares one lens with the opto-mechanical system, that is, the lens of the opto-mechanical system and the light sensor may be combined into the depth camera. In the embodiment, since the opto-mechanical system and the light sensor share one lens, consistence between optical centers of the opto-mechanical system and the depth camera may be implemented. In the embodiment, with regard to the projector, it is unnecessary to modify the existing projector; with regard to the depth camera, it is necessary for the depth camera to be able to detect the infrared light so as to detect the three-dimensional position. In the embodiment, the light sensor may detect the target light returning to the lens through the reflection of the semi-transmissive and semi-reflective sheet (that is, the light sensor of the depth camera can detect the target light).

In the embodiment, the first light source continuously emits the target light, which is reflected back to the lens of the opto-mechanical system upon encountering the obstacle and is reflected to the light sensor upon encountering the semi-transmissive and semi-reflective sheet, and then the light sensor receives the target light reflected from the semi-transmissive and semi-reflective sheet. The light sensor determines the distance of the obstacle by detecting a round-trip flight time of the target light.

In the embodiment, each pixel in an image of the first depth image data may represent a distance between an object represented by the pixel and the light sensor.

In the embodiment, detection of the distance is realized by detecting a phase offset of a light wave of the target light.

Step 203, a projected picture of the projector is corrected according to the first depth image data.

In an application scenario, the first depth image data may be an image of a display interface to be projected by the projector. For example, the display interface to be projected may be any projection medium that may display a projected image, such as a curtain, a wall, etc. In this application scenario, the display interface corresponding to the first depth image data may be a plane, and there may be the following situations for the correction of the projected picture.

In one example, if a central axis of the lens of the opto-mechanical system of the projector is perpendicular to the display interface to be projected, and an extension line of the central axis of the lens of the opto-mechanical system intersects with a midpoint of the display interface to be projected, then a center point of an image to be projected may be projected perpendicularly to the display interface to be projected, so that the projected picture is a required rectangle.

In one example, if an angle between the central axis of the lens of the opto-mechanical system of the projector and the display interface to be projected is less than 90 degree, a display image directly projected to the display interface to be projected may be a trapezoid. For example, a trapezoid correction may be performed on the projected picture. Optionally, the image to be projected may be pixel matched with the first depth image data, and the image to be projected may be deformed according to the pixel matching, so that the image to be projected may be evenly distributed in the first depth image data. Furthermore, the deformed image may be projected onto the display interface to be projected, so that the projected picture can meet viewing needs of human eyes.

In another application scenario, the first depth image data may be an image of a projection carrier, which may be a three-dimensional model. For example, if it is needed to project and display a view on a high mountain, the three-dimensional model may be a mountain model with bulges and grooves. For another example, in medical teaching, if it is needed to project and display an animal visceral distribution map, the three-dimensional model may be an animal shape model.

In one example, if it is needed to project and display the animal visceral distribution map, the animal shape model may be determined according to the first depth image data, and the first depth image data may be identified to determine a distribution area of each part of the animal shape model in the image. Furthermore, a pixel value of the first depth image data may be read to determine coordinate information of respective parts of the animal shape model. Furthermore, the image to be displayed is deformed according to respective parts of the animal shape model to match the image to be displayed with respective parts of the animal shape model. For example, a liver in the image to be displayed may be made to correspond to a liver part of the animal shape model. Furthermore, the deformed image is projected onto the animal shape model.

The method in the embodiment of the application may determine a plane visual image of the display interface for displaying the projected picture through image identification of the first depth image data, and obtain a position of the display interface relative to the projector by confirming the pixel value of the image pixel of the first depth image data. Based on the plane visual image and the position of the display interface relative to the projector, a mapping relationship between the image to be projected and the display interface may be determined, so that the image to be projected may be deformed according to the mapping relationship so as to realize correction of the projected picture of the projector. It can be understood that application scenarios of the method in the embodiment are not limited to the above scenarios, and the projection method in the embodiment of the application may be used in any scenario in which it is required to correct the projected picture based on a depth image.

As the method in the embodiment of the application uses the projector with the three-dimensional perception capability of the embodiment 1, the interaction with the user may also be realized by using the projector.

In the embodiment, referring to Fig. 6, the projection method in the embodiment may further include the following steps.

Step 204, second depth image data in a target area is determined by the light sensor.

In the embodiment, the second depth image data may be a depth image or a plurality of depth images.

Step 205, an indication action that appears in the target area is determined according to the second depth image data.

For example, the indication action may be a "confirming" action, such as an "OK" gesture, a nod, a hand swing to the bottom and so on. For example, the indication action may also be a "page turning" action, for example, a hand swing to left or right. For example, the indication action may also be a "cutting" action, a "shooting" action and so on in a game.

In the embodiment, if it is needed to determine whether the indication action exists in the second depth image data, it is required to firstly determine whether the user has performed a specified action in front of the projector. Through confirmation of a three-dimensional object, the indication action appears in videos of some displays, causing the projector to execute wrong instructions.

Firstly, it may be determined whether an acquired object in the second depth image data is a plane image or a stereoscopic indicator based on the second depth image data. The stereoscopic indicator may be a hand of the user, an indicator stick, a solid model and so on. For example, it may be determined whether the acquired object in the second depth image data is the stereoscopic indicator based on the pixel value of the image pixel in the second depth image data.

Secondly, if it is determined that the acquired object is the stereoscopic indicator, a shape of the acquired object may be identified. In one example, the indication action currently to be received by the projector is to confirm or not. Since "confirming" may be determined by a static action, it may be determined whether the shape of the acquired object is the "conforming" action by identifying a frame of the depth image. In another example, the indication action currently to be received by the projector may be to "cut" a fruit in a picture or not. Since the "cutting" action needs to be expressed by a dynamic action, it may be determined whether an action performed by the acquired object is "cutting" according to changes of the position of the acquired object in multiple frames of the depth image. In another example, the indication action currently to be received by the projector may be to turn a page or not. Since the page turning action needs to be expressed by a dynamic action, it may be determined whether there is a continuous movement of the acquired object from a position to another position according to the changes of the position of the acquired object in the multiple frames of the depth image. If there is the continuous movement of the acquired object, it indicates that the user has performed the page turning action.

Step 206, an instruction associated with the indication action is executed.

In the embodiment, if it is identified that the indication action matches with a corresponding instruction, the corresponding instruction may be executed.

For example, the instruction may be the page turning action when it is required to switch the displayed image; the instruction may be the confirming action for confirming whether it is required to play a video; or the instruction may be a game action instruction in a game interaction process.

As the method in the embodiment of the application uses the projector with the three-dimensional perception capability, the interaction with the user may be realized. For a projector that generally does not have the three-dimensional perception capability, in scenarios in which three-dimensional perception is required, such as automatic trapezoid correction, virtual touch and other scenarios, it is required to add an additional three-dimensional perception equipment such as a Time-of-Flight (TOF) camera and so on in the projector. However, if only the three-dimensional perception equipment is additionally provided outside the projector, it needs to be calibrated with an optical system of the projector every time it is used. This calibration process is very complex and the calibration result is invalid if the three-dimensional perception equipment is replaced. The projection with the three-dimensional perception capability is more convenient to use, as it does not need to be calibrated every time it is used, that is, the convenience of the projector is improved.

In the embodiment, the projection method in the embodiment may also include: calibrating the light sensor of the projector.

Optionally, a third-party camera may be used to facilitate calibration, wherein the third-party camera can collect the visible light and the infrared light. During calibration, a position of the third-party camera relative to the projector may be kept unchanged.

Step a, the projector may project a preset image onto a target plane, and the third-party camera acquires a projected image of the preset image. Position coordinates of the preset image in the projected image are calculated.

Step b, the infrared light is emitted by an infrared light source, an infrared pattern is projected onto the target plane, and the infrared light is imaged respectively by the depth camera composed of the light sensor and the lens of the opto-mechanical system and the third-party camera. A transformation relationship between depth camera coordinates and third-party camera coordinates is calculated.

In step c, by using the transformation relationship obtained in step b, the position coordinates of the preset image in the projected image obtained in step a are transformed into a coordinate system of the depth camera composed of the optical sensor and the lens of the opto- mechanical system. That is, an imaging position of the projected image of the projector in the depth camera may be obtained, and thus the calibration of the optical sensor may be realized.

Since the depth sensor formed by the light sensor shares the same lens with the projector, the imaging position of the projected image of the projector in the depth camera remains unchanged. Therefore, the light sensor may be used for a long time with only one calibration, and there is no need to calibrate the light sensor again, which may improve the convenience of the projector.

In addition, the embodiments of the application also provide a computer-readable storage medium on which a computer program is stored. When the computer program is executed by the processor, the steps of the projection method described in the above method embodiment are performed.

A computer program product of the projection method provided by the embodiments of the application includes a computer-readable storage medium storing program codes. Instructions included in the program codes may be used to perform the steps of the projection method described in the above method embodiment. For details, please refer to the above method embodiment and will not be repeated here.

In addition, the steps in the above projection method embodiment each may be realized by software modules. The functional modules each may be integrated together to form an independent part, or each module may exist alone, or two or more modules may be integrated to form an independent part.

If the functions are implemented in the form of software function modules and sold or used as an independent product, they may be stored in a computer-readable storage medium. Based on this understanding, the technical solution of the application may be essentially embodied in the form of software products or a part contributing to existing technology or a part of the technical solution may be embodied in the form of software products. A computer software product is stored in a storage medium and includes several instructions to cause a computer device (which may be a personal computer, a server, or a network device, etc.) to perform all or part of the steps of the method described in various embodiments of the application. The aforementioned storage medium includes various media that may store program codes, such as a Universal Serial Bus (USB) flash disk, a mobile hard disk, a Read-Only Memory (ROM), a Random Access Memory (RAM), a magnetic disc or an optical disc and so on. It should be noted that in this document, relational terms such as "first" and "second" are merely used to distinguish one entity or operation from another entity or operation, and do not necessarily require or imply any such actual relationships or orders between these entities or operations. Moreover, terms "include", "comprise" or any other variations thereof are intended to cover non-exclusive inclusion, so that a process, method, article or equipment including a series of elements includes not only those elements, but also other elements not explicitly listed, or elements inherent in such process, method, article or equipment. Without further limitations, elements defined by the statement "including..." do not exclude the existence of other elements in the process, method, article or equipment including the elements.

The above is only preferred embodiments of the application and is not used to limit the application. For those skilled in the art, various changes and modifications may be made to the application. Any modifications, improvements, equivalent replacements and so on of this application shall be included in the scopes of the application without departing from spirits and principles of the application. It should be noted that similar labels and letters represent similar items in the following drawings. Therefore, once an item is defined in a drawing, it does not need to be further defined and explained in subsequent drawings.

Only specific embodiments of the application are described above, and the protection scopes of the application are not limited thereto. Any person skilled in the field can easily think of changes or replacements within the technical scopes disclosed in the application, which should be covered by the protection scopes of the application. Therefore, the protection scopes of the application shall be subject to the protection scopes of the claims.

## Claims

1. A projector, **characterized by** comprising:
a housing;
an opto-mechanical system arranged inside the housing;
a first light source arranged on the housing and configured to emit target light of a specified wavelength;
a semi-transmissive and semi-reflective sheet arranged in the opto-mechanical system and configured to transmit visible light and reflect target light entering the opto-mechanical system, wherein the target light entering the opto-mechanical system is target light reflected back from an obstacle when the target light emitted by the first light source encounters the obstacle; and
a light sensor configured to detect target light reflected from the semi-transmissive and semi-reflective sheet, and determine position information of the obstacle according to a first time when the first light source emits the target light and a second time when the light sensor detects the target light reflected from the semi-transmissive and semi-reflective sheet.

2. The projector according to claim 1, wherein the light sensor is a time-of-flight sensor, the first light source is an infrared light source, and the target light is infrared light.

3. The projector according to claim 1, wherein the opto-mechanical system further comprises:
a digital micro-mirror device arranged inside the housing and located at a side away from a lens of the opto-mechanical system, wherein
the semi-transmissive and semi-reflective sheet is arranged between the lens of the opto-mechanical system and the digital micro-mirror device.

4. The projector according to claim 3, wherein a photosensitive surface of the light sensor is perpendicular to a light path of reflected light from the semi-transmissive and semi-reflective sheet.

5. The projector according to claim 4, wherein the photosensitive surface of the light sensor is perpendicular to the digital micro-mirror device, an angle between the digital micro-mirror device and the semi-transmissive and semi-reflective sheet is 45°, and an angle between the semi-transmissive and semi-reflective sheet and the photosensitive surface of the light sensor is 45°.

6. The projector according to claim 1, wherein an angle between the semi-transmissive and semi-reflective sheet and outgoing light passing through the opto-mechanical system is 45°, and a photosensitive surface of the light sensor is perpendicular to a path of reflected light from the semi-transmissive and semi-reflective sheet.

7. The projector according to claim 1, wherein the first light source is arranged on a first surface of the housing, and the first surface is a surface provided with the lens of the opto-mechanical system.

8. A projection method, **characterized in that** the projection method is applied to the projector according to any one of claims 1-6 and comprises:
emitting, by a first light source of the projector, target light of a specified wavelength;
determining, by a light sensor of the projector, first depth image data of a projection plane; and
correcting a projected picture of the projector according to the first depth image data.

9. The projection method according to claim 8, further comprising:
determining, by the light sensor, second depth image data in a target area;
determining an indication action that appears in the target area according to the second depth image data; and
executing an instruction associated with the indication action.

10. The projection method according to claim 8, further comprising: calibrating the light sensor of the projector.
